# NEUE EUROPÄISCHE PATENTSCHRIFT

(11) **EP 1 702 945 B2**
(45) Veröffentlichungstag und Bekanntmachung des Hinweises auf die Entscheidung über den Einspruch: **16.04.2014**
(45) Hinweis auf die Patenterteilung: 11.11.2009
(21) Anmeldenummer: 06110084.8
(22) Anmeldetag: 17.02.2006
(51) Int. Cl.: C08J 9/00, C08K 3/00, C08J 9/18

(54) **Füllstoffhaltige Polyolefinpartikelschaumstoffe**
Polyolefin foam particles containing fillers
Particules de mousse en polyoléfine contenant une charge

(30) Priorität: 18.03.2005 DE 102005013040; 08.09.2005 DE 102005042942
(43) Veröffentlichungstag der Anmeldung: 20.09.2006
(73) Patentinhaber: BASF SE, 67056 Ludwigshafen (DE)
(72) Erfinder: Braun, Frank, 67063, Ludwigshafen (DE); Fink, Günter, 67133, Maxdorf (DE); Mair, Gunther, 68163, Mannheim (DE); Keppeler, Uwe, 67126, Hochdorf-Assenheim (DE); Rudloff, Jan, 01127, Dresden (DE)
(74) Vertreter: Jacobi, Markus Alexander

(56) Entgegenhaltungen:
- EP-A- 1 602 684
- EP-A1- 1 602 684
- EP-A2- 0 138 431
- WO-A1-00/71328
- DE-A1- 19 740 472
- JP-A- H 115 863
- JP-A- H11 100 457
- US-A- 5 565 497
- US-A- 5 929 127
- US-A1- 2004 054 042
- US-B1- 6 414 047
- US-B2- 6 590 006
- PATENT ABSTRACTS OF JAPAN Bd. 2003, Nr. 12, 5. Dezember 2003 (2003-12-05) & JP 2004 149713 A (JSP CORP), 27. Mai 2004 (2004-05-27)

## Beschreibung

Die vorliegende Erfindung betrifft expandierbare Polyolefinpartikel und expandierte Polyolefinschaumpartikel, die 10 bis 40 Gew.-% anorganische Füllstoffe enthalten.

Expandierte Polypropylen (EPP)-Partikel werden in großtechnischem Maßstabe zur Herstellung von Schaumstoff-Formteilen eingesetzt. Diese werden vorwiegend als elastische, stoßfeste Verpackungsmaterialien eingesetzt, die darüber hinaus auch wärmedämmende Eigenschaften haben.

Zur weiteren Verringerung der Wärmeleitfähigkeit können Infrarotstrahlung reflektierende Metallpigmente wie Aluminiumpulver (EP-A 0 790 273) oder Graphitpartikel (WO 00/37546) in den EPP-Partikeln eingearbeitet werden. Die daraus erhältlichen Schaumstoff-Formteile werden z. B für Anwendungen in der Automobilindustrie eingesetzt.

Von Polyolefinen ist bekannt, dass ihre Kristallisation von zahlreichen Pigmenten beeinflusst wird (Industrielle Organische Pigmente, Herbst/Hunger, 2.Aufl. 1995, S. 75), was zur Verschlechterung wichtiger anwendungstechnischer Eigenschaften, wie Verzugserscheinungen, Spannungen oder Schwindungsanomalien führen kann.

Aufgrund des hohen Preises oder der Beeinflussung der Kristallisation von Polyolefinen sind nicht alle Pigmente uneingeschränkt als Füllstoffe von Polyolefin-Schaumstoffen geeignet.

Die nicht vorveröffentlichte PCT/EP/04/013748 beschreibt Partikelschaumformteile aus expandierbaren, Füllstoff enthaltenden Polymergranulaten, insbesondere expandierbares Polystyrol, durch Verschweißen von vorgeschäumten Schaumpartikeln.

Aufgabe der vorliegenden Erfindung war es, den genannten Nachteilen abzuhelfen und expandierbare Polyolefinpartikel und expandierte Polyolefinschaumpartikel, insbesondere Polypropylenschaumpartikel (EPP) zu finden, die zu preiswerten Polyolefinparti-kelschaumstoffen mit guten mechanischen Eigenschaften, Schaumstruktur und niedriger Wärmeleitfähigkeit verarbeitet werden können.

Demgemäß wurden expandierbare Polyolefinpartikel oder expandierte Polyolefinschaumpartikel, gefunden, welche 10 bis 40 Gew.-% anorganische Füllstoffe enthalten.

Überraschenderweise zeigen die erfindungsgemäßen Polyolefinpartikel-Schaumstoffe trotz der Anwesenheit von Füllstoffen eine hohe Geschlossenzelligkeit, wobei in der Regel mehr als 60%, bevorzugt mehr als 70, besonders bevorzugt mehr als 80 % der Zellen der einzelnen Schaumpartikel geschlossenzellig sind. Die Zellzahl beträgt vorzugsweise 5 - 500 Zellen pro mm².

Als Füllstoffe kommen anorganische Pulver, sowie Mischungen davon in Betracht. Als anorganische Füllstoffe können die pulverförmigen anorganischen Stoffe Talk, Kreide, Kaolin (Al₂(Si₂O₅)(OH)₄), Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Glimmer oder Wollastonit eingesetzt werden. Die mittleren Teilchendurchmesser sollten im Bereich der Zellgröße oder kleiner liegen. Bevorzugt wird ein mittlerer Teilchendurchmesser im Bereich von 0,1 bis 100 µm, bevorzugt im Bereich von 1 bis 50 µm.

Durch die Art und Menge der Füllstoffe können die Eigenschaften der expandierbaren thermoplastischen Polymeren und der daraus erhältlichen Partikelschaumformteile beeinflussen. Der Anteil des Füllstoffes liegt im Bereich von 10 bis 40 Gew.-%, bezogen auf das thermoplastische Polymer. Bei Füllstoffgehalten im Bereich von 5 bis 30 Gew.% wird keine wesentliche Verschlechterung der mechanischen Eigenschaften der Partikelschaumstoffe, wie Biegefestigkeit oder Druckfestigkeit beobachtet. Durch die Verwendung von Haftvermittlern, wie Maleinsäureanhydrid-modifizierte Polyolefine, epoxidgruppenhaltige Polymere oder Organosilane kann die Anbindung des Füllstoffes an die Polymermatrix und damit die mechanischen Eigenschaften der Partikelschaumformteile deutlich verbessert werden.

In der Regel verringern anorganische Füllstoffe die Brennbarkeit. Insbesondere durch Zusatz von anorganischen Pulvern, wie Aluminiumhydroxid kann das Brandverhalten deutlich verbessert werden.

Bei Verwendung von magnetischen Füllstoffen, z. B. magnetischen Metalloxiden, insbesondere magnetischen Eisenoxiden, können Polyolefinpartikel-Schaumstoffe für Abschirmzwecke erhalten werden.

Die erfindungsgemäßen expandierten Polyolefinschaumpartikel weisen eine Kristallstrukur auf, die im Differential Scanning Calorimetry (DSC)-Thermogramm durch einen Niedertemperaturschmelzepeak und einen

Hochtemperaturpeak erkennbar ist. Die Wärmemenge des Hochtemperaturpeaks, gemessen bei einer Aufheizrate von 10°C/min, beträgt bevorzugt 2 bis 40 J/g, besonders bevorzugt 3 bis 30 J/g. Sie wird über die Peakfläche wie in EP-A 0 963 827 beschrieben, bestimmt.

Die erfindungsgemäßen expandierten Polyolefinpartikel lassen sich prinzipiell durch Suspensions- oder Extrusionsverfahren direkt oder indirekt über expandierbare Polyolefinpartikel und Verschäumen in einem Druckvorschäumer mit Wasserdampf oder Heißluft herstellen.

Beim Suspensionsverfahren wird das Polyolefin als ein Füllstoff-haltiges Granulat mit Wasser, einem Suspensionshilfsmittel und dem Treibmittel in einem geschlossenen Reaktor bis über die Erweichungstemperatur des Granulats erhitzt. Dabei werden die Polymerpartikel mit dem Treibmittel imprägniert. Anschließend kann man entweder die heiße Suspension abkühlen, wobei sich die Partikel unter Einschluss des Treibmittels verfestigen und den Reaktor entspannen. Die auf diese Weise erhaltenen treibmittelhaltigen (expandierbaren) Partikel werden durch Erwärmen zu den expandierten Partikeln verschäumt, siehe z.B. WO 01/29119 und EP-A 1 281 729. Alternativ kann man die heiße Suspension ohne Abkühlen schlagartig entspannen (Explosionsexpansionsverfahren), wobei die erweichten, treibmittelhaltigen Partikel unmittelbar zu den expandierten Partikeln aufschäumen, siehe z.B. EP-A 53 333 und 611 795.

Beim Extrusionsverfahren wird das Polyolefin in einem Extruder unter Aufschmelzen mit Füllstoff und einem Treibmittel vermischt, das dem Extruder zugeführt wird. Die treibmittelhaltige Mischung wird entweder unter solchen Druck- und Temperaturbedingungen ausgepresst und granuliert, dass das Polyolefingranulat nicht schäumt (expandiert), wozu beispielsweise eine Unterwassergranulierung verwendet wird, die bei einem Wasserdruck von mehr als 2 bar betrieben wird, siehe EP-A 1 132 420. Man erhält treibmittelhaltige, expandierbare Partikel, die durch anschließendes Erwärmen zu den expandierten Partikeln verschäumt werden. Alternativ kann man die Mischung auch ohne Überdruck auspressen und granulieren. Dabei schäumt der Schmelzestrang auf und man erhält durch Granulierung die expandierten Partikel, siehe EP-A 588 321 und DE-A 197 56 264.

Als Polyolefin sind insbesondere geeignet:
Randomcopolymere des Propylens mit 0,1 bis 15, bevorzugt 0,5 bis 12 Gew.-% eines Comonomeren. Bevorzugtes Comonomer, wobei dieses Ethylen ist oder ein C₄₋₁₀-α-Olefin oder deren Mischungen. Besonders bevorzugte Randomcopolymere sind Copolymere von Propylen mit 0,5 bis 6 Gew.% Ethylen oder mit 0,5 bis
   15 Gew.% But-1-en, oder ein Terpolymer aus Propylen, 0,5 bis 6 Gew.-% Ethylen und 0,5 bis 6 Gew.-% But-1-en,
oder
Mischungen der genannten Polymere, wobei ggf. Phasenvermittler mitverwendet werden, um die Phasenanbindung der in manchen Fällen unverträglichen Polymere zu verbessern.

Der Kristallitschmelzpunkt geeigneter Polyolefine liegt üblicherweise im Bereich von 90 bis 170°C. Er ist beispielsweise als Peakmaximum im Differential Scanning Calorimetry (DSC)-Diagramm bestimmbar. Die Schmelzwärme der Polyolefine ist ebenfalls per DSC bestimmbar und beträgt im allgemeinen 20 bis 300 J/g. Der Schmelzflussindex (MFI, melt flow index) des Polyolefins beträgt in der Regel 0,1 bis 100 g/10 min, ermittelt bei 230°C und 2,16 kg Belastung für Propylenpolymere bzw. 190°C und 2,16 kg Belastung für Ethylenpolymere, nach DIN 53 735.

Bevorzugt verwendet man als Polyolefin ein Copolymer des Propylens mit 0,1 bis 15 Gew.% Ethylen und/oder But-1-en, besonders bevorzugt sind Propylen-EthylenCopolymere mit 1 bis 5 Gew.% Ethylen. Sie weisen einen Kristallitschmelzpunkt von 130 bis 160°C, und eine Dichte von etwa 0,9 g/cm³, auf.

Die Polyolefine sind bekannt und können nach allen üblichen Verfahren erhalten werden, beispielsweise nach dem Hochdruck- (ICI), Mitteldruck- (Phillips), Niederdruck-(Ziegler), Gasphasen-, Gasphasenwirbelbett- oder Metallocen-Verfahren.

Das Polyolefin kann mit bis zu 50 % seines Gewichts eines weiteren Thermoplasten mit einer Glasübergangstemperatur (bestimmbar z.B. als Wendepunkt im DSC-Diagramm) unterhalb von 180°C abgemischt sein. Geeignete Thermoplasten sind z.B. Polyamide in Mengen von 5 bis 40 Gew.-%, wobei der Mischung übliche Phasenvermittler, z.B. Blockcopolymerisate, wie Exxelor P 1015 (Fa. Exxon), zugesetzt werden können.

Es hat sich gezeigt, dass die Erfindung auch ohne Zumischen eines solchen weiteren Thermoplasten durchführbar ist. Dies ist insofern bevorzugt, als durch einen

Fremdthermoplasten die Recyclierbarkeit des Polyolefins bzw. des daraus hergestellten Schaumstoffs leidet. Kautschukartige Ethylen-Propylen-Copolymerisate, die zur Elastifizierung zugesetzt werden können, zählen in diesem Sinne nicht zu den weiteren Thermoplasten.

Das Polyolefin kann als handelsübliches Granulat, Pulver, Grieß oder sonstiger Form eingesetzt werden. Zweckmäßigerweise wird ein Granulat eingesetzt. Geeignet ist z.B. ein sog. Minigranulat mit einem bevorzugten mittleren Durchmesser von 0,2 bis 10, insbesondere von 0,5 bis 5 mm. Dieses meist zylinderförmige oder runde Minigranulat wird hergestellt durch Extrudieren des Polyolefins zusammen mit Füllstoffen und/oder dem zuzumischenden Thermoplasten, und weiteren Zusatzstoffen, Auspressen aus dem Extruder, gegebenenfalls Abkühlen und Granulieren. Bei zylinderförmigem Minigranulat beträgt die Länge bevorzugt 0,2 bis 10, insbesondere 0,5 bis 5 mm. Das Granulat kann auch plättchenförmig geformt sein.

Die expandierbaren Polyolefinpartikel können nach dem Suspensionsverfahren oder nach dem Extrusionsverfahren hergestellt werden.

Beispielsweise kann man beim Suspensionsverfahren die Füllstoffe bei der Herstellung des Polyolefin-Minigranulats zugeben, d.h. das Minigranulat enthält bereits den Füllstoff. Ebenso bevorzugt kann man beim Extrusionsverfahren die Füllstoffe in den Extruder, in dem auch das Treibmittel eingemischt wird, eindosieren. Die Füllstoffe können als solches, oder z.B. vermischt mit üblichen Dispergierhilfsmitteln, oder vermischt mit einem geringen Anteil Polymeren als sog. Masterbatch, zugefügt werden.

Je nach verwendetem Verfahren können die bevorzugten Treibmittel ggf. variieren. Beim Suspensionsverfahren verwendet man als Treibmittel bevorzugt organische Flüssigkeiten oder anorganische Gase oder Gemische davon. Als Flüssigkeiten kommen halogenierte Kohlenwasserstoffe in Frage, bevorzugt sind jedoch gesättigte, aliphatische Kohlenwasserstoffe, insbesondere solche mit 3 bis 8 C-Atomen. Besonders bevorzugt ist n-Butan. Geeignete anorganische Gase sind Stickstoff, Luft, Ammoniak oder Kohlendioxid.

Bei der Herstellung via Extrusionsverfahren verwendet man als Treibmittel bevorzugt flüchtige organische Verbindungen mit einem Siedepunkt bei Normaldruck 1013 mbar von -25 bis 150, insbesondere -10 bis 125°C. Gut geeignet sind Kohlenwasserstoffe (bevorzugt halogenfrei), insbesondere C₄₋₁₀-Alkane, beispielsweise die Isomere des Butans, Pentans, Hexans, Heptans und Octans, besonders bevorzugt s-Pentan. Geeignete Treibmittel sind außerdem sterisch anspruchsvollere Verbindungen wie Alkohole, Ketone, Ester, Ether und organische Carbonate. Bevorzugte Ketone sind 3,3-Dimethyl-2-butanon (= Pinakolon bzw. veraltet Pinakolin) und 4-Methyl-2-pentanon (= Methylisobutylketon). Als Ester kann man bevorzugt Isobutylacetat verwenden.

Auch Halogenkohlenwasserstoffe können verwendet werden, bevorzugt ist das Treibmittel jedoch halogenfrei. Geringe Anteile halogenhaltiger Treibmittel im Treibmittelgemisch sollen jedoch nicht ausgeschlossen werden. Es versteht sich, dass auch Mischungen der genannten Treibmittel verwendet werden können.

Die Treibmittelmenge beträgt bevorzugt 0,1 bis 40, insbesondere 0,5 bis 35 und besonders bevorzugt 1 bis 30 Gew.-Teile, bezogen auf 100 Gew.-Teile eingesetztes Polyolefin.

Das erfindungsgemäße expandierte Polyolefin kann außerdem die üblichen Zusatzstoffe enthalten. Solche Zusatzstoffe sind z.B. Antioxidantien, Stabilisatoren, Flammschutzmittel, Wachse und Farbstoffe. Sie werden in üblichen, an sich bekannten Mengen verwendet.

Beim Suspensionsverfahren arbeitet man in der Regel absatzweise in einem Imprägnierbehälter, z.B. in einem Rührkesselreaktor. In den Reaktor werden das Polyolefin, z.B. als Füllstoff-haltiges Minigranulat, eindosiert, außerdem Wasser bzw. ein anderes Suspensionsmedium, sowie das Treibmittel und ggf. ein Suspensionshilfsmittel. Als Suspensionshilfsmittel eignen sich wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Sie werden üblicherweise in Mengen von 0,05 bis 10 Gew.-%, bezogen auf das Polyolefin, verwendet.

Danach wird der Reaktor verschlossen und der Reaktorinhalt auf eine Imprägniertemperatur von üblicherweise mindestens 100°C erhitzt. Das Treibmittel kann dabei vor, während oder nach dem Aufheizen des Reaktorinhalts zugefügt werden. Die Imprägniertemperatur sollte in der Nähe der Erweichungstemperatur des Polyolefins liegen. Bei Polypropylen sind Imprägniertemperaturen von 110 bis 180, insbesondere 130 bis 160°C bevorzugt.

Je nach Menge und Art des Treibmittels sowie nach der Höhe der Temperatur stellt sich im verschlossenen Reaktor ein Druck (Imprägnierdruck) ein, der im allgemeinen 2 bis 100 bar (absolut) beträgt. Erforderlichenfalls kann man den Druck durch ein Druckregelventil oder Nachpressen von Treibmittel regulieren. Bei den Imprägnierbedingungen erhöhte Temperatur und Überdruck diffundiert Treibmittel in die Polymergranulatpartikel hinein. Die Imprägnierdauer beträgt im allgemeinen 0,5 bis 10 Stunden.

In einer Ausführungsform des Suspensionsverfahrens wird nach dem Imprägnieren die erhitzte Suspension auf üblicherweise unter 100°C abgekühlt, wodurch sich das Polyolefin wieder verfestigt und das Treibmittel einschließt. Danach wird entspannt. Man erhält expandierbare Polyolefinpartikel, die schließlich in üblicher Weise aus der Sus pension abgetrennt werden. Anhaftendes Wasser wird in der Regel durch Trocknen z.B. im Stromtrockner, entfernt. Falls erforderlich kann man davor oder danach anhaftendes Suspensionshilfsmittel entfernen, indem man die Partikel mit einem geeigneten Reagens behandelt. Beispielsweise kann man mit einer Säure wie Salpetersäure, Salzsäure oder Schwefelsäure behandeln, um säurelösliche Suspensionshilfsmittel, z.B. Metallcarbonate oder Tricalciumphosphat, zu entfernen.

Die erhaltenen expandierbaren Polyolefinpartikel werden anschließend durch Erwärmen zu den expandierten Polyolefinpartikeln verschäumt, wie es weiter unten beschrieben wird.

In einer anderen Ausführungsform des Suspensionsverfahrens, auch Explosionsexpansionsverfahren oder Dokan-Verfahren (siehe EP-A 611 795) genannt, wird die erhitzte Suspension nicht abgekühlt, sondern heiß ohne Abkühlen schlagartig entspannt. Beim Entspannen expandiert das zuvor in die Polyolefinpartikel diffundierte Treibmittel "explosionsartig" und schäumt die erweichten Partikel auf. Man erhält expandierte Polyolefinpartikel.

Üblicherweise wird die Suspension durch eine Düse, ein Ventil oder eine andere geeignete Vorrichtung entspannt. Man kann die Suspension unmittelbar auf Atmosphärendruck, beispielsweise 1013 mbar, entspannen. Bevorzugt wird jedoch in einen Zwischenbehälter entspannt, dessen Druck zum Aufschäumen der Polyolefinpartikel ausreicht, jedoch über dem Atmosphärendruck liegen kann. Geeigneterweise entspannt man auf einen Druck von z.B. 0,5 bis 5, insbesondere 1 bis 3 bar (absolut). Während des Entspannens kann man im Imprägnierbehälter den Imprägnierdruck konstant halten, indem man Treibmittel nachpresst. In der Regel kühlt man die Suspension nach dem Entspannen ab, trennt die expandierten Polyolefinpartikel in üblicher Weise aus der Suspension ab, entfernt ggf. davor oder danach anhaftendes Suspensionshilfsmittel wie bereits beschrieben, und wäscht und trocknet schließlich die Partikel.

Beim Extrusionsverfahren werden dem Extruder das Polyolefin, das Treibmittel, die Füllstoffe und gegebenenfalls Nukleierungsmittel, und Zusatzstoffe gemeinsam (als Mischung) oder getrennt voneinander, an einer oder an verschiedenen Stellen des Extruders zugeführt. Dabei ist es möglich, jedoch nicht erforderlich, vorab aus den festen Komponenten eine Mischung herzustellen. Beispielsweise kann man zunächst Polyolefin, Füllstoffe, Nukleierungsmittel und ggf. Zusatzstoffe mischen und die Mischung dem Extruder zuführen, wonach dem Extruder das Treibmittel zugeführt wird, d.h. der Extruder mischt das Treibmittel in eine Polymerschmelze ein. Ebenso kann man dem Extruder eine Mischung von Treibmittel und Füllstoffe zuführen, d.h. die Füllstoffe erst mit dem Treibmittel zugeben.

Im Extruder werden die genannten Einsatzstoffe unter Aufschmelzen des Polyolefins vermischt. Als Extruder kommen alle üblichen Schneckenmaschinen in Betracht, insbesondere Einschnecken- und Doppelschneckenextruder (z.B. Typ ZSK von Fa. Werner & Pfleiderer), Ko-Kneter, Kombiplast-Maschinen, MPC-Knetmischer, FCM-Mischer, KEX-Knetschneckenextruder und Scherwalzenextruder, wie sie z.B. in Saechtling (Hg.), Kunststoff-Taschenbuch, 27. Auflage, Hanser-Verlag München 1998, Kap. 3.2.1 und 3.2.4, beschrieben sind. Der Extruder wird üblicherweise bei einer Temperatur betrieben, bei der das Polyolefin als Schmelze vorliegt, beispielsweise bei 130 bis 250, insbesondere 160 bis 220°C.

Drehzahl, Länge, Durchmesser und Ausgestaltung der Extruderschnecke(n), zugeführte Mengen und Extruderdurchsatz werden in bekannter Weise derart gewählt, dass im extrudierten Polyolefin die Füllstoffe Nukleierungsmittel und ggf. die Zusatzstoffe gleichmäßig verteilt sind.

In einer Ausführungsform des Extrusionsverfahrens stellt man expandierbare Partikel her. Um zu verhindern, dass die treibmittelhaltige Schmelze bereits beim Austritt aus dem Extruder aufschäumt, wird der Schmelzestrang bei solchen Temperatur- und Druckbedingungen ausgepresst und granuliert, dass praktisch kein Aufschäumen (Expandieren) erfolgt. Diese Bedingungen können nach Art und Menge der Polymere, der Zusatzstoffe und insbesondere des Treibmittels verschieden sein. Die optimalen Bedingungen lassen sich durch Vorversuche einfach ermitteln.

Eine technisch günstige Methode ist die Unterwassergranulierung in einem Wasserbad, das eine Temperatur unter 100°C aufweist und unter einem Druck von mindestens 2 bar (absolut) steht. Die Temperatur darf nicht zu tief sein, da sonst die Schmelze an der Düsenplatte erstarrt, und sie darf nicht zu hoch sein, da sonst die Schmelze expandiert. Je höher der Siedepunkt des Treibmittels und je geringer die Treibmittelmenge ist, desto höher kann die Wassertemperatur und desto niedriger kann der Wasserdruck sein. Bei dem besonders bevorzugt Treibmittel s-Pentan liegt die optimale Wasserbadtemperatur bei 30 bis 60°C und der optimale Wasserdruck bei 8 bis 12 bar (absolut). Statt Wasser kann man auch andere geeignete Kühlmedien verwenden. Ebenso kann man eine Wasserringgranulierung anwenden. Dabei ist der Schneidraum derart eingekapselt, dass die Granuliervorrichtung unter Druck betrieben werden kann.

Man erhält auf diese Weise expandierbare Polyolefinpartikel, die anschließend vom Wasser abgetrennt und ggf. getrocknet werden. Danach werden sie zu expandierten Polyolefinpartikeln verschäumt wie weiter unten beschrieben.

In einer anderen Ausführungsform des Extrusionsverfahrens wird die treibmittelhaltige Schmelze ohne Unterwassergranulierung, Wasserringgranulierung oder sonstige Vorkehrungen, die ein Schäumen verhindern, ausgepresst und granuliert. Beispielsweise kann man direkt in die Atmosphäre auspressen. Dabei schäumt der ausgepresste Schmelzestrang auf, und durch Granulieren des aufgeschäumten Strangs erhält man expandierte Polyolefinpartikel.

Bevorzugte Verfahren zur Herstellung von expandierbaren Polyolefinpartikeln umfassen die Stufen:
a) Aufschmelzen von Polyolefin mit 10 bis 40 Gew.% Füllstoffe und Extrusion zu Minigranulat mit einem mittleren Durchmesser von 0,2 bis 10 mm,
b) Imprägnieren des Minigranulates mit 0,1 bis 40 Gew.-% eines flüchtigen Treibmittels in wässriger Suspension unter Druck bei Temperaturen im Bereich von 100 bis 170°C und Abkühlen der Suspension auf 20 bis 95°C,
c) anschließendem Entspannen.
Ein bevorzugtes Verfahren zur Herstellung von expandierten Polyolefinschaumpartikeln (EPP) umfasst die Stufen
a) Aufschmelzen von Polyolefin mit 10 bis 40 Gew.% Füllstoffe und Extrusion zu Minigranulat mit einem mittleren Durchmesser von 0,2 bis 10 mm,
b) Imprägnieren des Minigranulates mit 0,1 bis 40 Gew.-% eines flüchtigen Treibmittels in wässriger Suspension unter Druck bei Temperaturen im Bereich von 100 bis 170°C und
c) anschließendem Entspannen.

Sofern man expandierbare Partikel erhält, werden diese in an sich bekannter Weise aufgeschäumt (verschäumt), wobei die erfindungsgemäßen expandierten Polyolefinpartikel entstehen. Das Verschäumen erfolgt in der Regel durch Erwärmen der expandierbaren Partikel in üblichen Verschäumungsvorrichtungen, z.B. mit Heißluft oder überhitztem Wasserdampf in einem sog. Druckvorschäumer, wie er zur Verarbeitung von expandierbarem Polystyrol (EPS) üblich ist. Bevorzugt verschäumt man die Partikel bei einer Temperatur, bei der sie erweichen (Erweichungsbereich), z.B. bei Temperaturen von 100 bis 180°C.

Verschäumt man mit Wasserdampf, so beträgt je nach Art und Menge von Polyolefin und Treibmittel, und der gewünschten Dichte des herzustellenden Schaums, der Druck des Wasserdampfs üblicherweise 2 bis 8, bevorzugt 1 bis 5 bar (absolut). Dabei ergeben höhere Drucke geringere Dichten des verschäumten Polyolefins, d.h. mit dem Wasserdampfdruck kann man die gewünschte Dichte einstellen. Die Dauer des Verschäumens beträgt üblicherweise 1 bis 300, bevorzugt 1 bis 30 sec. Nach dem Verschäumen wird entspannt und abgekühlt. Bevorzugt beträgt der Expansionsfaktor beim Verschäumen 2 bis 50.

Die Polyolefinpartikel können vor und/oder nach dem Verschäumen mit einem Antiblockingmittel versehen werden. Geeignete Antiblockingmittel sind z.B. Talkum, Metallverbindungen wie Tricalciumphosphat, Calciumcarbonat, Kieselsäuren, insbesondere pyrogene Kieselsäuren wie Aerosil® von Fa. Degussa, Salze langkettiger (z.B. C₁₀₋₂₂) Carbonsäuren, beispielsweise Stearinsäuresalze wie Calciumstearat, Ester langkettiger Carbonsäuren, z.B. Glycerinester wie die Glycerinstearate, und Silikonöle. Das Antiblockingmittel wird in der Regel durch Mischen, Aufsprühen, Auftrommeln oder andere übliche Verfahren auf die Partikel aufgebracht. Es wird üblicherweise in Mengen von 0,01 bis 20, bevorzugt 0,1 bis 10, besonders bevorzugt 0,5 bis 6 Gew.-Teilen, bezogen auf 100 Gew.-Teile des Polyolefins, verwendet.

Man erhält in jedem Falle expandierte Polyolefinpartikel mit einer Dichte. Bevorzugte Dichten liegen bei 5 bis 600 g/l, und besonders bevorzugt 10 bis 300 g/l.

Die expandierten Partikel sind in der Regel zumindest annähernd kugelförmig und weisen üblicherweise einen Durchmesser von 0,2 bis 20, bevorzugt 0,5 bis 15 und insbesondere 1 bis 12 mm auf. Bei nicht kugelförmigen, z.B. länglichen oder zylinderförmigen Partikeln, ist mit Durchmesser die längste Abmessung gemeint.

Aus den erfindungsgemäßen Polyolefinpartikeln kann man Schaumstoffe herstellen, beispielsweise indem man sie in einer geschlossenen Form unter Wärmeeinwirkung miteinander verschweißt. Dazu füllt man die Partikel in die Form und leitet nach Schließen der Form Wasserdampf oder Heißluft ein, wodurch die Partikel weiter expandieren und miteinander zum Schaumstoff, vorzugsweise mit einer Dichte im Bereich von 8 bis 600 g/l, verschweißen. Die Schaumstoffe können Halbzeuge sein, beispielsweise Platten, Profile oder Bahnen, oder fertige Formteile mit einfacher oder komplizierter Geometrie. Demnach schließt der Begriff Polyolefin-Schaumstoff, Schaumstoffhalbzeuge und Schaumstoff-Formteile ein.

Gegenstand ist daher auch die Verwendung der expandierten Polyolefinpartikel zur Herstellung von Polyolefin-Schaumstoffen, sowie Polyolefin-Schaum-stoffe, erhältlich aus den expandierten Polyolefinpartikeln.

Beispiele:

### Beispiel 1

75 Gewichtsteile eines Propylen-Ethylen-Randomcopolymeren (2 Gew.-% Ethylen) wurde zusammen mit 25 Gewichtsteilen Calciumcarbonat in einem Extruder bei ca. 220°C gemischt. Die Mischung wurde mittels Unterwassergranulierung zu Pellets von ca. 1,2 mg granuliert.

Diese Granulate wurden wie folgt imprägniert.

In einem geschlossenen Rührkessel wurden unter Rühren 100 kg der Propylen-Ethylen-Randomcopolymeren-Granulate, und 6,7 kg Tricalciumphosphat in 245 kg Wasser bei Raumtemperatur dispergiert. Nach Zugabe von 24 kg n-Butan wurde der Reaktorinhalt auf ca. 130°C erwärmt, wobei sich ein Druck von ca. 20 bar einstellte. Danach wurde der Reaktorinhalt durch eine Düse in einen Zwischenbehälter entspannt. Die erhaltenen expandierten Polypropylenpartikel wurden abgetrennt, gewaschen und anschließend getrocknet. Die Schüttdichte der expandierten Partikel betrug 26,4 g/l. Die Wärmemenge des Hochtemperaturpeaks aus dem DSC-Thermogramm bei einer Aufheizrate von 10°C/min betrug 19,2 J/g.

Die Schaumpartikel wurden in eine geschlossene Form gegeben und mit Wasserdampf unter Druck zu Formteilen mit einer Dichte von 60 g/l verschweißt.

Die Wärmeleitfähigkeit nach DIN 52612 betrug 38 mW/(m*K).

Vergleichsversuch

Beispiel 1 wurde mit 100 kg Propylen-Ethylen-Randomcopolymer-Granulat, das kein Calciumcarbonat enthielt, wiederholt. Aus den erhaltenen Schaumpartikeln mit Schüttdichte 27,4 g/l wurden Formteile einer Dichte 60 g/l hergestellt. Die Wärmeleitfähigkeit nach DIN 52612 betrug 42 mW/(m*K). Die Wärmemenge des Hochtemperaturpeaks aus dem DSC-Thermogramm bei einer Aufheizrate von 10°C/min betrug 23,4 J/g.

### Beispiel 2

27,7 Gewichtsteile eines Propylen-Ethylen-Randomcopolymeren (2 Gew.-% Ethylen) wurde zusammen mit 72 Gewichtsteilen Eisenoxid in einem Extruder bei ca. 220°C gemischt. Die Mischung wurde durch eine Düse gepresst und die erhaltenen Stränge zu Pellets granuliert.

Dieses Granulat wurde wie folgt imprägniert.

In einem geschlossenen Rührkessel wurden unter Rühren 10 kg der Propylen B67524EP -Ethylen-Randomcopolymeren-Granulate, und 0,3 kg Tricalciumphosphat in 60 kg Wasser bei Raumtemperatur dispergiert. Nach Zugabe von 2 kg n-Butan wurde der Reaktorinhalt auf ca. 135°C erwärmt, wobei sich ein Druck von ca. 18 bar einstellte. Danach wurde der Reaktorinhalt durch eine Düse in einen Zwischenbehälter entspannt. Die erhaltenen expandierten Polypropylenpartikel wurden abgetrennt, gewaschen und anschließend getrocknet. Die Schüttdichte der expandierten Partikel betrug 110 g/l.

## Patentansprüche

1. Expandierte Polyolefinschaumpartikel, **dadurch gekennzeichnet, dass** sie 10 bis 40 Gew.-% pulverförmige anorganische Füllstoffe, ausgewählt aus Talk, Kreide, Kaolin, Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Glimmer oder Wollastonit enthalten, und dass sie eine Dichte im Bereich von 5 bis 600 g/l, und eine Geschlossenzelligkeit von mehr als 80 % der Zellen aufweisen, wobei das Polyolefin ein Randomcopolymer aus Propylen mit 0,1 bis 15 Gew.% Ethylen und/oder C₄₋C₁₀-α-Olefin ist, und wobei die Polyolefinschaumpartikel 10 bis 40 Gew.% an Füllstoff enthalten.

2. Expandierte Polyolefinschaumpartikel, nach Anspruch 1, **dadurch gekennzeichnet, dass** sie als Füllstoff Calciumcarbonat enthalten.

3. Expandierte Polyolefinschaumpartikel, nach Anspruch 1 oder 2, **dadurch gekennzeichnet, dass** die Füllstoffe einen mittleren Teilchendurchmesser von 0,1 bis 100 µm haben.

4. Expandierte Polyolefinschaumpartikel nach einem der Ansprüche 1 bis 3, **dadurch gekennzeichnet, dass** sie im Differential Scanning Calorimetrie (DSC)-Thermogramm einen Niedertemperaturschmelzepeak und einen Hochtemperaturschmelzepeak aufweisen.

5. Expandierte Polyolefinschaumpartikel nach einem der Ansprüche 1 bis 4, **dadurch gekennzeichnet, dass** die Wärmemenge des Hochtemperaturpeaks, gemessen bei einer Aufheizrate von 10°C/min, 2 bis 40 J/g beträgt.

6. Formteile mit einer Dichte im Bereich von 8 bis 600 g/l, erhältlich durch Verschweißen von Polyolefinschaumpartikel nach einem der Ansprüche 1 bis 5 mit Heißluft oder Wasserdampf.

7. Verfahren zur Herstellung von expandierten Polyolefinschaumpartikeln (EPP) gemäß den Ansprüchen 1 bis 5, umfassend die Stufen:
a) Aufschmelzen von Polyolefin mit 10 bis 40 Gew.% Füllstoff und Extrusion zu Minigranulat mit einem mittleren Durchmesser von 0,2 bis 10 mm,
b) Imprägnieren des Minigranulates mit 0,1 bis 40 Gew.% eines flüchtigen, organischen, flüssigen Treibmittels in wässrigerer Suspension unter Druck bei Temperaturen im Bereich von 100 bis 170°C und
c) anschließendem Entspannen.

## Claims

1. Expanded polyolefin foam particles comprising from 10 to 40% by weight of inorganic fillers in powder-form selected from talc, chalk, kaolin, aluminum hydroxide, magnesium hydroxide, aluminum nitrite, aluminum silicate, barium sulfate, calcium carbonate, calcium sulfate, silica, quartz flour, Aerosil, alumina, mica, or wollastonite, and having a density from 5 to 600 g/l and having a closed cell content of more than 80% of the cells, wherein the polyolefin is a random copolymer of propylene with from 0.1 to 15% by weight of ethylene and/or a C₄-C₁₀-α-olefin, and wherein the foam particles comprise 10 to 40% by weight of fillers.

2. Expanded polyolefin foam particles according to claim 1 comprising calcium carbonate as filler.

3. Expanded polyolefin foam particles according to claim 1 or 2, wherein the fillers have a mean particle diameter of from 0.1 to 100 µm, wherein the polyolefin is a random copolymer of propylene with from 0.1 to 15% by weight of ethylene and/or a C₄-C₁₀-α-olefin, and wherein the foam particles comprise 10 to 40% by weight of fillers.

4. Expanded polyolefin foam particles according to claims 1 to 3 which have a low-temperature melting peak and a high-temperature melting peak in the differential scanning calorimetry (DSC) thermogram.

5. Expanded polyolefin foam particles according to claims 1 to 4, wherein the enthalpy of the high-temperature peak, measured at a heating rate of 10°C/min, is from 2 to 40 J/g.

6. A molding which has a density in the range from 8 to 600 g/l and is obtainable by fusion of polyolefin foam particles according to any of claims 1 to 5 by means of hot air or steam.

7. A process for producing expanded polyolefin foam particles (EPP) according to any of claims 1 to 5, which comprises the steps
a) melting of polyolefin with from 10 to 40% by weight of filler and extrusion to form minigranules having a mean diameter of from 0.2 to 10 mm,
b) impregnation of the minigranules with from 0.1 to 40% by weight of a volatile organic liquid or an inorganic gas as blowing agent in aqueous suspension under superatmospheric pressure at temperatures in the range from 100 to 170°C and
c) subsequent expansion.

## Revendications

1. Particules de mousse de polyoléfine expansées, **caractérisées en ce qu'**elles contiennent 10 à 40% en poids de charges inorganiques en forme de poudre, choisies parmi le talc, la craie, le kaolin, l'hydroxyde d'aluminium, l'hydroxyde de magnesium, le nitrite d'aluminium, le silicate d'aluminium, le sulfate de barium, le carbonate de calcium, le sulfate de calcium, la silice, la farine de quartz, l'aérosil, l'alumine, le mica ou la wollastonite, les particules ayant une densité de 5 à 600 g/l et une fermeture cellulaire de plus de 80% des cellules, **caractérisées en ce que** la polyoléfine est un copolymère aléatoire de propylene contenant 0,1 à 15% en poids d'éthylène et/ou une α-oléfine en C₄-C₁₀, et **caracterisées en ce que** les particules de mousse contiennent 10 à 40% en poids de charges.

2. Particules de mousse de polyoléfine expansées selon la revendication 1, caractérisées en se qu'elles contiennent le carbonate de calcium en tant que charges.

3. Particules de mousse de polyoléfine expansées selon la revendication 1 ou 2, **caractérisées en ce que** les charges ont un diameter de particule moyen de 0,1 à 100 µm, **caractérisées en ce que** la polyoléfine est un copolymère aléatoire de propylene contenant 0,1 à 15% en poids d'éthylène et/ou une α-oléfine en C₄-C₁₀, et **caractérisées en ce que** les particules de mousse contiennent 10 à 40% en poids de charges.

4. Particules de mousse de polyoléfine expansées selon une des revendications 1 à 3, caractérisées en se qu'elles presentment sur le thermogramme de DSC (Differential Scanning Calorimetry) un pic de fusion à temperature basse et un pic de fusion à temperature élevée.

5. Particules de mousse de polyoléfine expansées selon une des revendications 1 à 4, caractérisées en se que la quantité de chaleur du pic à temperature élevée, mesurée à un taux de chauffage de 10 °C/min, est de 2 à 40 J/g.

6. Articles moulés ayant une densité dans la plage allant de 8 à 600 g/l, pouvant être oblenus par soudure de particules de mousse de polyoléfine selon l'une quelconque des revendications 1 à 5 avec de l'air schaud ou de la vapuer d'eau.

7. Procédé de fabrication de particules de mousse de polyoléfine expansées (EPP) selon les revendications 1 à 5, comprenant les étapes:
a) fusion d'une polyoléfine avec 10 à 40% en poids de charges et extrusion pour former un minigranulat ayant un diameter moyen de 0,2 à 10 mm,
b) imprégnation du minigranulat avec 0,1 à 40% en poids d'un liquid organique volatile ou d'un gaz inorganique en tant qu'agent moussant dans une suspension aqueuse sous pression à des temperatures dans la plage allant de 100 à 170°C et
c) détente ultérieure.
